# EUROPEAN PATENT APPLICATION

(11) **EP 0 995 928 A2**
(43) Date of publication of application: **26.04.2000**
(21) Application number: 99305212.5
(22) Date of filing: 01.07.1999
(51) Int. Cl.: F16F 13/14, F16F 1/393

(54) **Hydroelastic articulating joints**

(30) Priority: 22.10.1998 GB 9823157
(71) Applicant: DRAFTEX INDUSTRIES LIMITED, Edinburgh EH2 3AP, Scotland (GB)
(72) Inventor: Kieffer, Jérôme, 44300 Nantes (FR)
(74) Representative: Foster, David Martyn

(57) **Abstract**

A hydroelastic articulating joint, such as for pivotally supporting the inner end of a suspension link in a motor vehicle, comprises a tube (10) vertically fixed to the vehicle body and around which are centrally mounted two rigid sleeves (16A,16B). Upper and lower annular parts (20A,20B) of resilient material are compressively clamped around the sleeves (20A,20B) by a rigid external clamping ring (12) which is connected to the suspension link. Fluid filled chambers (36,38), interconnected through the resilient material by means of a conduit, are filled with hydraulic fluid. The joint permits angular movement about an axis "X" without substantial effect by the hydraulic fluid. Oscillatory vibration of the link in the radial or "Y" direction is damped by movement of the hydraulic fluid between the two chambers.

## Description

The invention relates to a hydroelastic joint, comprising first rigid means, second rigid means embracing the first rigid means, resilient material mounted between the first and second rigid means for resiliently permitting vibratory movement between the first and second rigid means along a line extending between them, and first and second hollow interconnected flexible-walled chambers containing hydraulic fluid positioned in relation to the resilient material so that relative vibratory movement of the two rigid means along the said line flexes the walls of the chambers and causes fluid displacement between them which tends to damp the vibratory movement.

The invention also relates to a hydroelastic joint for pivotally supporting an end of a suspension link in a vehicle, comprising first rigid means extending along a longitudinal axis and adapted to be attached in a substantially vertical attitude to the body of the vehicle, resilient material annularly surrounding the first rigid means, second rigid means surrounding the resilient material and resiliently supported thereby on the first rigid means, and two interconnected hollow chambers defined in the resilient material on opposite sides of the first rigid means and filled with hydraulic fluid whereby vibrations of the link in directions along a line between the first and second rigid means and perpendicular to the longitudinal axis are damped by consequent displacement of the fluid between the two chambers.

Such hydroeleastic joints are shown for example in GB-A-2 308 422. Such joints permit the vibratory movement along the line between the two rigid means and provide fluid damping of such vibratory movement. However, some applications of hydroelastic joints require angular inclining movement between the first and second rigid means. The invention aims to satisfy this requirement.

According to the invention, therefore, the hydroelastic joint as first set forth above is characterised in that the resilient material permits limited angular inclining movement between the first and second rigid means about a predetermined pivotal axis perpendicular to the said line, and in that such angular inclining movement causes substantially no fluid displacement between the two chambers tending to damp the angular inclining movement.

According to the invention, also, the hydroelastic joint as secondly set forth above is characterised in that the second rigid means is adapted for connection to the link whereby pivotting of the link about a pivotal axis perpendicular to the longitudinal axis is resiliently permitted by the resilient material and causes substantially no displacement of the fluid.

Hydroelastic articulating joints embodying the invention, and for use in vehicle suspension systems, will now be described, by way of example only, with reference to the accompanying diagrammatic drawings in which:
Figure 1 is a vertical cross-section through one of the joints;
Figure 1A is an enlarged view of part of the joint of Figure 1;
Figure 2 is a cross-section on the line II-II of Figure 1;
Figure 3 is a cross-section on the line III-III of Figure 2;
Figure 4 corresponds to Figure 1 but shows the joint in operation;
Figure 5 is a view corresponding to part of Figure 1 but showing an initial stage during assembly of the joint;
Figure 6 shows a modification;
Figure 7 is a perspective view of a front suspension arm of a vehicle in which the joint can be mounted; and
Figure 8 is a cross-section through part of the suspension arm of Figure 8.

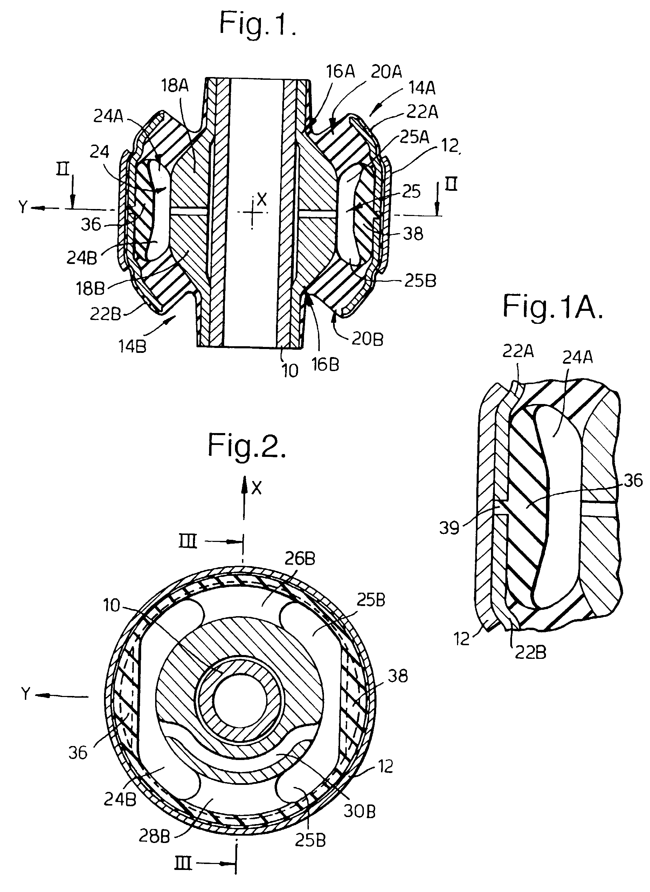

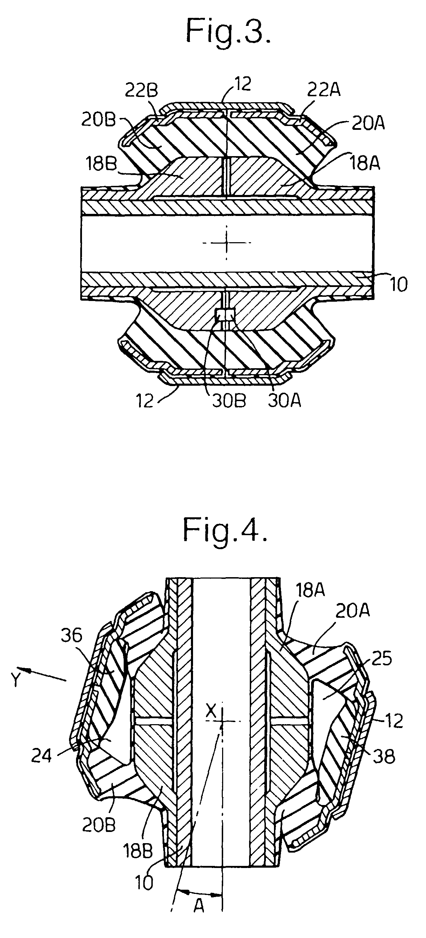

Figure 1 shows a tube 10 forming part of the articulation joint. The tube 10 may be held fixed, such as in a vertical attitude for example, on the chassis or body of a motor vehicle. In a manner to be explained, the tube 10 supports a ring 12 which may be attached (by means not shown) to a link forming part of the vehicle suspension which is required to articulate incliningly about the axis X. Figure 4 shows possible articulation movement of the ring 12 with respect to the tube 10.

The articulation joint is formed in two parts 14A and 14B which are brought together on the tube 10 and clamped in sealed fashion by the ring 12, in a manner to be explained. The part 14A comprises a sleeve 16A having an enlarged end 18A of frusto-conical shape. The sleeve 16A is fitted over the tube 10 and then embraced by an elastomeric part 20A of generally annular shape which incorporates an annular metal armature 22A and defines cavities 24A and 25A (see also Figure 2).

The part 14B is similarly constructed, and its components have the same references except for the use of the suffix "B" instead of the suffix "A".

Figure 2 shows the shapes of the cavities 24B and 25B. The recesses 24A and 25A are similarly shaped. As shown in Figure 2, the pair of cavities 24B,25B is separated by portions 26B and 28B of the elastomeric material. Similarly, the cavities 24A and 25A are separated by similar portions of the elastomeric material.

As shown in Figures 2 and 3, each sleeve 16A,16B is formed with a channel 30A,30B. Channel 30B interconnects cavities 24B,25B as shown in Figure 2. Similarly, channel 30A interconnects cavities 24A and 25A.

During assembly, the components of the upper part 14A of the joint and the lower part 14B are brought together as shown in Figure 1 and Figure 3 and clamped tightly together by the external ring 12. This clamping process takes place with the parts immersed in hydraulic fluid. In this way, therefore, the cavities 24A,24B,25A,25B and the interconnecting conduit formed by the channels 30A and 30B are filled with the hydraulic fluid. Leakproof sealing is provided by a sealing joint between the facing edges of the armatures 22A,22B and/or by a rubber sleeve between the ring 12 and the outside surface of the elastomeric material 20A,20B.

During this assembly process, the open mouths of the cavities 24A,24B come together to form a first sealed chamber 24, and cavities 25A and 25B come together to form a second sealed chamber 25. Similarly, the open mouths of the channels 30A,30B come together to form a sealed conduit 30 which interconnects the chamber 24 with the chamber 25.

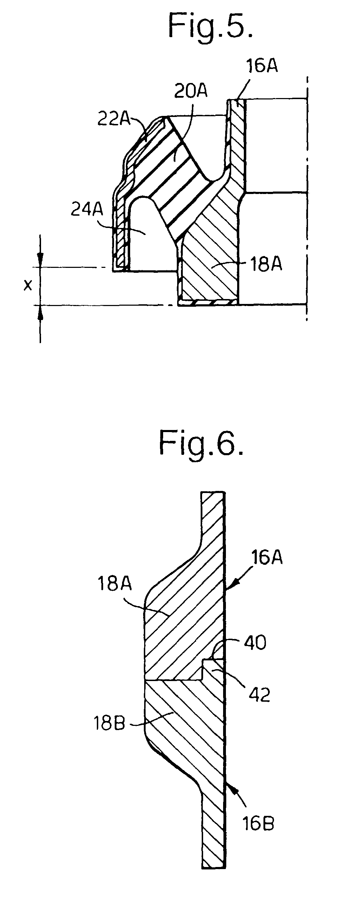

Figure 5 illustrates an early stage in the assembly process. The relaxed attitude of the elastomeric material 20A is such that the end 32A of the armature 22A is axially displaced from the end face 34A of the frusto-conical part 18A of the sleeve 16A by a distance *x*. The corresponding end 32B of the armature 22B is similarly displaced from the end face of the frusto-conical part 18B. During the assembly process, the external ring 12 is tightened so as to force the armature 22A downwards and the armature 22B upwards so as in each case to eliminate the gap *x*. This applies a pre-stress to the elastomeric material.

In use, the elastomeric material 20A,20B enables resilient articulation of the ring 12 with respect to the tube 10, about the axis X, as shown in Figure 4, up to a maximum angle of deflection slightly greater than the angle A. Although the shapes of the chambers 24,25 change during this angular deflection, there is little change in volume and therefore there will be substantially no fluid movement through the connecting conduit 30. However, vibratory movement of the ring 12 with reference to the tube 10 to and fro along the Y axis shown in the Figures will cause corresponding oscillatory movement of the fluid within the conduit 30, which will cause anti-vibration damping. Such damping occurs whatever the angular position of the ring 12 about the axis X.

Resilient elastomeric abutments 36 and 38 are mounted within the chambers 24 and 25 to limit movement in the direction of the Y axis. They can be integrally mounted with the elastomeric parts 20A,20B. Instead, they can be formed separately and inserted in the chambers during the assembly process. For example, as shown in Figure 1A, they can be integral with a ring 39 which is trapped between the armatures 22A,22B.

The pre-stressing of the elastomeric material (as explained in connection with Figure 5) helps to increase the life of the joint.

The tube 10 mutually aligns the sleeves 16A,16B. However, the tube may be omitted if an arrangement of the form shown in Figure 6 is used instead, in which one of the sleeves (e.g. sleeve 16A) has a circular recess 40 locating a corresponding circular shoulder 42.

The articulation joint may be used in many applications where significant conical articulation is required. One particular application is for supporting each (or possibly only one) inner end of a wishbone link in a vehicle suspension system. Each such inner end is required to pivot about a generally horizontal axis in response to vertical suspension movement. The articulation joint described enables the use of a vertical bush, permitting the necessary pivotting movement about a horizontal axis (the "X" axis as shown in Figure 5). Such an arrangement provides better location than a horizontal bush. In addition, and in the manner described above, such a vertically arranged bush provides resilient damping against rapid radial vibrations whatever the conical position around the axis X.

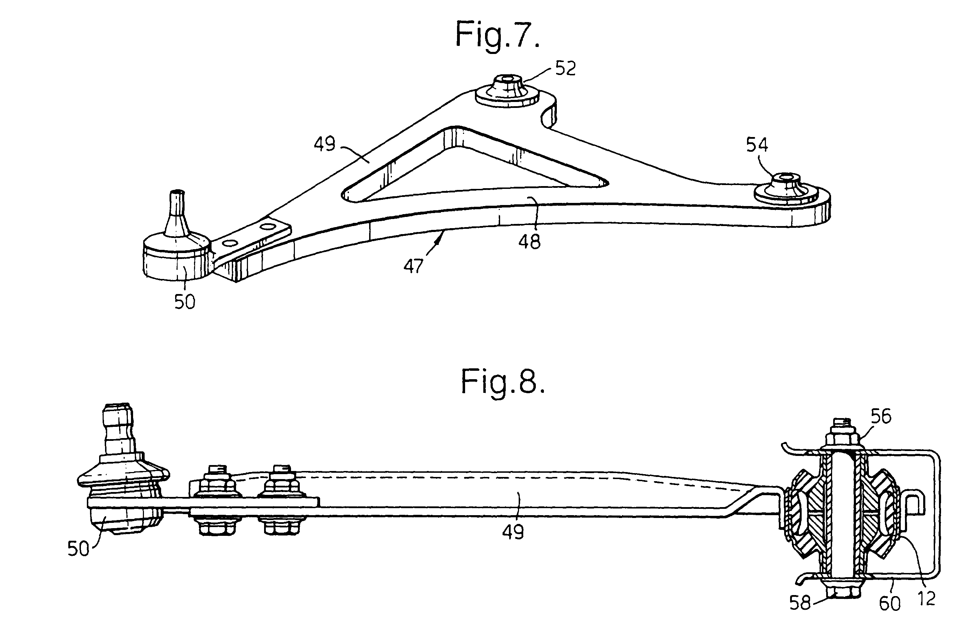

Figures 7 and 8 illustrate such a wishbone link 47 in more detail. The link comprises arms 48 and 49 and carries a ball joint 50 supporting and allowing angular movement of the wheel (not shown). At the inner end of the link, it is attached to the body of the vehicle by two joints 52,54 which are each in the form described above with reference to Figures 1 to 6, as is shown more clearly in the cross-sectional view in Figure 8 through one of the arms of the link. As shown in Figure 8, the tube 10 of the joint is secured by nuts 56,58 to the chassis or body 60 of the vehicle, while the ring 12 is securely clamped within a hole formed in the arm of the wishbone link. If desired, only one of the joints 52,54 (Figure 7) is of the form illustrated in Figures 1 to 6; the other joint can be a conventional joint without the flexibly walled interconnected fluid-filled chambers 36,38.

Another possible application of the joint described with reference to Figures 1 to 6 is for a bush at one end of a torque link for limiting movement of the engine of a motor vehicle relative to the vehicle's body or chassis. However, many other applications are possible.

The construction of the joint in two halves which are brought longitudinally together is advantageous for manufacturing purposes. However, such a configuration is not essential.

## Claims

1. A hydroelastic joint, comprising first rigid means (10,18), second rigid means (12) embracing the first rigid means (10,18), resilient material (20) mounted between the first and second rigid means (10,18,12) for resiliently permitting vibratory movement between the first and second rigid means (10,18;12) along a line extending between them, and first and second hollow interconnected flexible-walled chambers (24,25) containing hydraulic fluid positioned in relation to the resilient material (20) so that relative vibratory movement of the two rigid means (10,18;12) along the said line flexes the walls of the chambers (24,25) and causes fluid displacement between them which tends to damp the vibratory movement, characterised in that the resilient material (20) permits limited angular inclining movement between the first and second rigid means (10,18;12) about a predetermined pivotal axis perpendicular to the said line, and in that such angular inclining movement causes substantially no fluid displacement between the two chambers (24,25) tending to damp the angular inclining movement.

2. A joint according to claim 1, characterised in that the angular inclining movement flexes the walls of the two chambers (24,25) whereby to alter their shapes without significantly affecting their volumes.

3. A joint according to claim 1 or 2, characterised in that the first rigid means (10,18) extends longitudinally and the second rigid means (12) extends annularly around the first means (10,18) with the resilient material (20) arranged annularly between the two rigid means (10,18;12), the pivotal axis extending perpendicularly to the longitudinal direction of the first means.

4. A joint according to claim 3, characterised in that the chambers (24,25) are incorporated within the resilient material (20) on respectively opposite sides of the first rigid means (10,18).

5. A joint according to claim 4, characterised in that each chamber (24,25) extends arcuately.

6. A joint according to claim 4 or 5, characterised in that the two chambers (24,25) are interconnected by means of a conduit (30) within the resilient material (20).

7. A joint according to any one of claims 3 to 6, characterised in that the second rigid means (12) clamps the resilient material (20) around the first rigid means (10,18).

8. A joint according to any one of claims 3 to 7, characterised in that the second rigid means (12) compressively pre-stresses the resilient material (20).

9. A joint according to any one of claims 3 to 7, characterised in that the first rigid means (10,18) is shaped to extend radially outwards into the resilient material (20).

10. A joint according to any one of claims 3 to 9, characterised in that the resilient material (20) is formed in two annular parts (20A,20B) which are brought together end to end around the first rigid means (10,18) in the longitudinal direction thereof.

11. A joint according to claim 10, characterised in that each chamber is formed by two cavities (24A,24B;25A,25B) respectively disposed in the two annular parts of the resilient material (20A,20B) with open mouths which are brought together when the two annular parts (20A,20B) are brought together.

12. A joint according to claim 10 or 11, characterised in that the two annular parts of the resilient material (20A,20B) are clamped together by the second rigid means (12).

13. A joint according to any one of claims 3 to 12, characterised in that the first rigid means (10,18) comprises two annular sleeves (18A,18B) which are brought together end to end and mutually centred.

14. A joint according to claim 10 or 11, characterised in that the first rigid means comprises two annular sleeves (18A,18B) which are brought together end to end and mutually centred, the two annular parts (20A,20B) of the resilient material (20) being respectively placed around the annular sleeves (18A,18B), the two annular parts (20A,20B) of the resilient material being clamped longitudinally together by the second rigid means (12) whereby to clamp the sleeves (18A,18B) longitudinally together.

15. A joint according to claim 13 or 14, characterised in that the first rigid means comprises a longitudinal member (101) extending through the sleeves (18A,18B) to centre them.

16. A hydroelastic joint for pivotally supporting an end of a suspension link in a vehicle, comprising first rigid means (10,18) extending along a longitudinal axis and adapted to be attached in a substantially vertical attitude to the body of the vehicle, resilient material (20) annularly surrounding the first rigid means (10,18), second rigid means (12) surrounding the resilient material (20) and resiliently supported thereby on the first rigid means (10,18), and two interconnected hollow chambers (24,25) defined An the resilient material (20) on opposite sides of the first rigid means (10,18) and filled with hydraulic fluid whereby vibrations of the link in directions along a line between the first (10,18) and second (12) rigid means and perpendicular to the longitudinal axis are damped by consequent displacement of the fluid between the two chambers (24,25), characterised in that the second rigid means (12) is adapted for connection to the link whereby pivotting of the link about a pivotal axis perpendicular to the longitudinal axis is resiliently permitted by the resilient material and causes substantially no displacement of the fluid (20).

17. A joint according to claim 16, characterised in that the second rigid means comprises an annular band (12) clamping the resilient material (20) to the first rigid means (10,18).

18. A joint according to claim 16, characterised in that the first rigid means comprises two annular sleeves (18A,18B) placed end to end together and centred around the longitudinal axis.

19. A joint according to claim 18, characterised in that the sleeves (18A,18B) are centred by a longitudinal tube (10) around which they are positioned.

20. A joint according to claim 18, characterised in that the sleeves (18A,18B) are centred by being interlocked together.

21. A joint according to any one of claims 18 to 20, characterised in that the resilient means comprises two annularly shaped parts of resilient material (20A,20B) placed end to end around the sleeves (18A,18B).

22. A joint according to claim 21, characterised in that each chamber is defined by two cavities (24A,24B;25A,25B) respectively formed in the two annular parts of the resilient material (20A,20B) so that the open mouths of the cavities are brought together when the annular parts (20A,20B) of the resilient material are brought together.

23. A joint according to any one of claims 18 to 22, characterised in that the two annular parts (20A,20B) of the resilient material are clamped longitudinally together by the second rigid means (12) and thereby clamp the two sleeves (18A,18B) longitudinally together.

24. A joint according to claim 17 or 23, characterised in that the second rigid means (12) applies a compressive pre-stress to the resilient material (20).
